# EUROPEAN PATENT APPLICATION

(11) **EP 2 362 069 A2**
(43) Date of publication of application: **31.08.2011**
(21) Application number: 11153861.7
(22) Date of filing: 09.02.2011
(51) Int. Cl.: F01D 11/12, F02K 3/06

(54) **Panelled liner assembly of a casing liner in a gas turbine**

(30) Priority: 26.02.2010 GB 1003240
(71) Applicant: Rolls-Royce plc, London SW1E 6AT (GB)
(72) Inventor: Walton, Paul Robert, Stratford upon Avon, Warwickshire CV37 6 (GB); Evans, Richard Hugh, Coventry, CV3 2RW (GB)
(74) Representative: Gee, Philip David

(57) **Abstract**

A panelled assembly has a spacer 26 of cuboid, or rectangular prism, shape located between adjacent first panels 16 in order to maintain separation of the panels 16 at a desired minimum distance during mounting of the panels. During installation, the spacer 26 abuts the first side edge 16b of one panel, and then the second side edge 16d of the circumferentially adjacent panel is made to abut the opposed side of the spacer. This results in an axially extending gap 28 of a constant width between adjacent first panels 16. Similarly, spacers 26 are located between adjacent second panels 18, adjacent third liner panels 20, adjacent fourth panels 22 and adjacent panels 24 as the panels are installed to make up the assembly. This results in axially extending gaps 28, each of a constant width, between circumferentially adjacent panels. The material from which the spacers are made is substantially the same as filler material which is used to fill the gaps between adjacent panels caused by the presence of the spacers. Thus the need for removal of the spacers is obviated.

## Description

The present invention relates to a panelled assembly, in particular, a panelled assembly comprising a plurality of panels with spacing elements located between adjacent panels, and to a method of forming the same.

In a ducted fan, such as is commonly used in an aero engine, for example, a fan is disposed co-axially within a duct and is driven to rotate within the duct to direct air rearwardly through the duct.

For efficiency and stability of the fan blades the gaps between the tips of the blades and the inner casing of the duct within which the fan rotates must be kept to a minimum so as to minimise leakage of air around the tips of the blades.

With smaller clearances between the blade tips and the duct casing comes the likelihood that some rubbing between the two will take place in certain operating conditions. For example, when the speed of rotation of the fan increases the blades can elongate due to centrifugal forces. Also, for an aero engine, during certain manoeuvres of the aircraft gyroscopic forces may temporarily cause the fan and duct to come out of perfect axial alignment which can lead to rubbing of the blade tips against the casing.

To accommodate this rubbing, the duct casing is often provided with a lining comprising a sacrificial abradable layer, which is designed to be cut or rubbed away by the blade tips, backed by a honeycomb structure. The liner is sometimes referred to as a Fan Track Liner (FTL), and comprises a plurality of discrete panels.

Fan track liner panels, along with any acoustic panels and ice - impact panels, have been previously secured to the inside surface of the fan case using either mechanical fixing elements, that are arranged to pass radially through reinforced portions of the panel and engage the structure behind, or else by adhesive bonding. In the case of the former, the reinforcement structures necessary to accommodate the fixing elements disadvantageously adds to weight of the panels, and the presence of the fixing elements causes irregularities on the surface of the panels, potentially affecting the aerodynamic performance of the liner. In the case of adhesive bonding, it is necessary to maintain the panels in juxtaposition whilst the adhesive cures.

It is known to use L-shaped metal spacers to maintain the axial gap between the front edge of the fan track liner and the casing hook. These spacers are unsatisfactory, because they must be removed after the adhesive cures, which is time-consuming and can damage the fan track liner or the casing. Furthermore, the metal spacers do not allow any movement or settling of the liners during curing.

Embodiments of the present invention aim to address at least some of the above mentioned problems.

The present invention is defined in the attached independent claims, to which reference should now be made. Further, preferred features may be found in the sub-claims appended thereto.

According to the invention there is provided a panelled assembly comprising: a plurality of panels attached to a substrate in juxtaposition; at least one spacing element located between at least one pair of adjacent panels, the spacing element arranged to maintain separation of the panels at a predetermined minimum distance; and filler material filling a gap between adjacent panels due to the presence of the or each spacing element; wherein the or each spacing element comprises substantially the same material as the filler material.

In a preferred arrangement substantially all of the panels are maintained in a spaced-apart configuration, with gaps of predetermined minimum size therebetween, filled with filler material.

Preferably the shape of the spacing element is substantially that of a rectangular prism. The material from which both the filler and the spacing elements are made preferably comprises an epoxy.

The panels may be attached to the substrate by an adhesive.

The invention also includes a casing for a gas turbine engine comprising: an annular casing portion having an inner surface; and a casing liner mounted on the inner surface, wherein the casing liner comprises a panelled assembly according to any statement herein, and the substrate comprises the inner surface of the annular casing portion.

In a preferred arrangement the panels are arranged so as to form a first annulus with spacing elements located between circumferentially adjacent panels.

Preferably the panels are arranged so as to form a second annulus axially spaced from the first annulus, wherein spacing elements are located between circumferentially adjacent and axially adjacent panels.

The invention also includes a gas turbine engine comprising a panelled assembly or a casing according to any statement herein.

According to another aspect the invention provides a method of forming a panelled assembly on a substrate, the method comprising: attaching a plurality of panels to the substrate by adhesive; providing a spacing element between adjacent panels so as to maintain separation of the panels at a predetermined minimum distance during attachment; and filling gaps between panels due to the presence of the spacing element with a filler, wherein the spacing element comprises substantially the same material as the filler.

The invention may comprise any combination of the features and/or limitations referred to herein, except combinations of such features as are mutually exclusive. Embodiments of the present invention will now be described, by way of example only, with reference to the accompanying drawings, in which:
Figure 1 schematically shows a partial section through a fan case assembly of a gas turbine engine;
Figure 2 schematically shows an arrangement of panels within the fan case assembly of Figure 1;
Figure 3 schematically shows an enlarged view of the arrangement of panels of Figure 2;
Figure 4 schematically shows the views A-A and B-B of Figure 3; and
Figure 5 is a detailed schematic view of a spacing element for use with the panels of Figures 2-4.

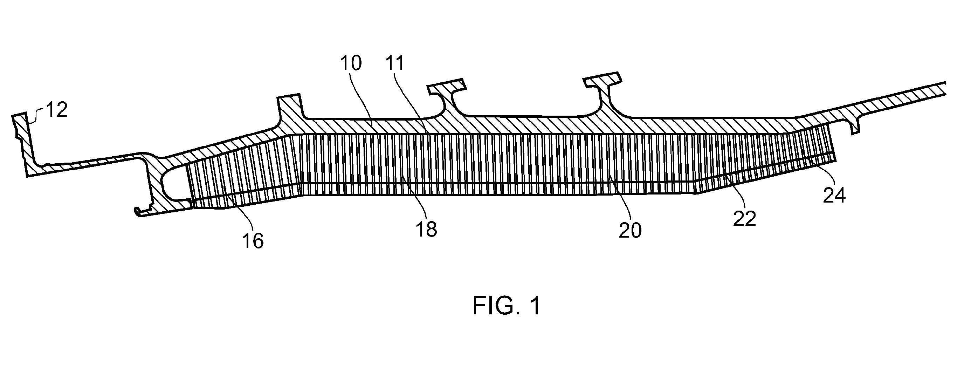

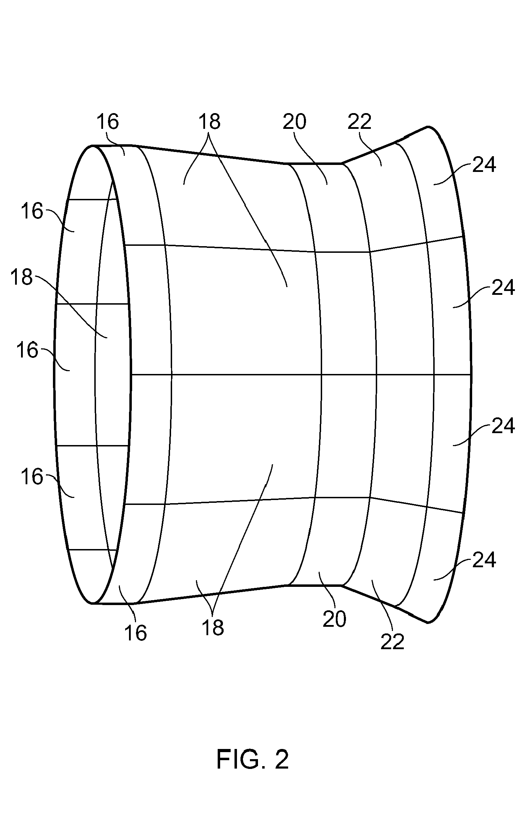

Figure 1 shows a partial section through a fan case assembly of a gas turbine engine. The annular fan case 10 is generally cylindrical or frustoconical in shape. It has a forward flange 12 and a rearward flange (not shown), attached to further structure of the gas turbine engine (not shown). The forward flange 12, rearward flange and the annulus of the fan case 10 between them, provide a load path through which mechanical loads may be transmitted during the operation of the gas turbine engine. Within the annular fan case 10 are secured first, second, third and fourth fan track liner panels 16, 18, 20, 22 and ice impact liner panels 24 that are axially adjacent to one another. A number of each type of panel are arranged circumferentially around an inner surface 11 of the fan case 10 to form a ring, or annulus, of panels. This is shown more clearly in Figure 2, in which the fan case 10 itself is omitted in the interests of clarity. The panels (16, 18, 20, 22, 24) are of Nomex (RTM) material, comprising a honeycomb structure with the voids of the honeycomb structure filled with a filler material, such as an epoxy void filler. In the case of the forward, fan track liner panels, the inner fan-facing surface of the panels is designed to be abradable by the tips of the fan blades.

During manufacture of the gas turbine engine, the panels 16, 18, 20, 22, 24 are secured to the inner surface 11 of the fan case using a film adhesive. The film adhesive is a solid pliable thin layer which is applied to the back of each panel. The panel is then attached to an interior surface of the casing and is heat-cured to secure it. The panels are spaced apart from one another using spacers in an arrangement which is described below in detail.

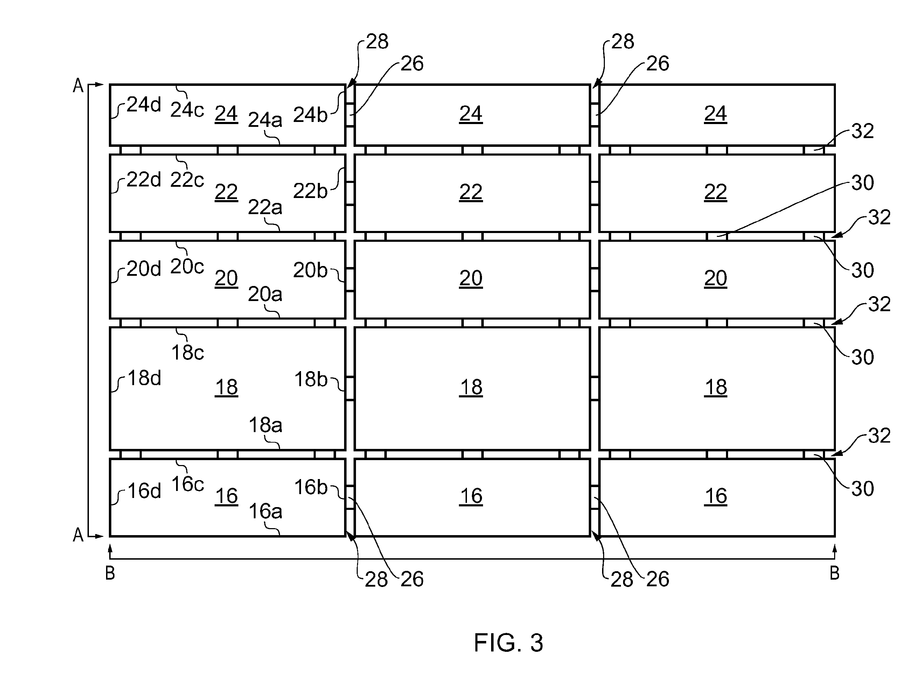

Referring now to Figure 3, each panel 16, 18, 20, 22, 24 has a respective front edge 16a, 18a, 20a, 22a, 24a, a respective first side edge 16b, 18b, 20b, 22b, 24b, a respective rear edge 16c, 18c, 20c, 22c, 24c and a respective second side edge 16d, 18d, 20d, 22d, 24d.

A spacer 26 of cuboid, or rectangular prism, shape is located between each adjacent pair of first fan track liner panels 16 in order to maintain separation of the panels 16 at a desired minimum distance during mounting of the panels. During installation, the spacer 26 abuts the first side edge 16b of one panel, and then the second side edge 16d of the circumferentially adjacent panel is made to abut the opposed side of the spacer. This results in an axially extending gap 28 of a constant width between adjacent first fan track liner panels 16. Similarly, spacers 26 are located between adjacent second fan track liner panels 18, adjacent third fan track liner panels 20, adjacent fourth fan track liner panels 22 and adjacent ice-impact liner panels 24 as the panels are installed to make up the assembly. This results in axially extending gaps 28, each of a constant width, between circumferentially adjacent panels. In this embodiment the axially extending gaps 28 between adjacent first fan track liner panels 16 are circumferentially aligned with, and are of the same width as, the axially extending gaps 28 between adjacent second fan track liner panels 18, adjacent third fan track liner panels 20, adjacent fourth fan track liner panels 22 and adjacent ice-impact liner panels 24. However, in other embodiments the axially extending gaps 28 may be staggered.

Three spacers 30 are located between circumferentially adjacent first fan track liner panels 16 and second fan track liner panels 18 in order to keep the panels 16, 18 at a desired minimum distance apart. Each spacer 30 abuts the rearward edge 16c of the first fan track liner panel 16 and the forward edge 18a of the second fan track liner panel 18. This results in a circumferentially extending gap 32 between adjacent first and second fan track liner panels 16, 18. Similarly, spacers 30 are located between adjacent second and third fan track liner panels 18, 20, adjacent third and fourth fan track liner panels 20, 22 and adjacent fourth fan track liner panels 22 and ice impact liner panels 24. This results in circumferentially extending gaps 32, each of a constant width, between axially adjacent panels.

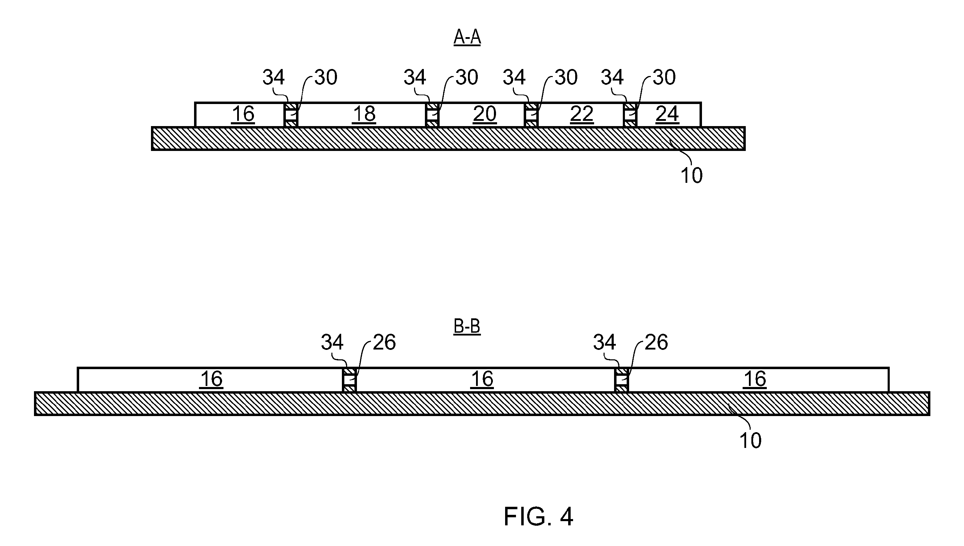

As shown in Figure 4 the spacers 26, 30 are ideally positioned so that they remain below the surface of the panel. After the panels have all been fixed to the fan casing 10, the axially extending and circumferentially extending gaps 28, 32 are filled with a filler material 34, such as an epoxy void filler. In this embodiment the epoxy void filler comprises a base and an activator that must be mixed together before use. The adhesive and filler material then cure to firmly adhere the panels to the substrate.

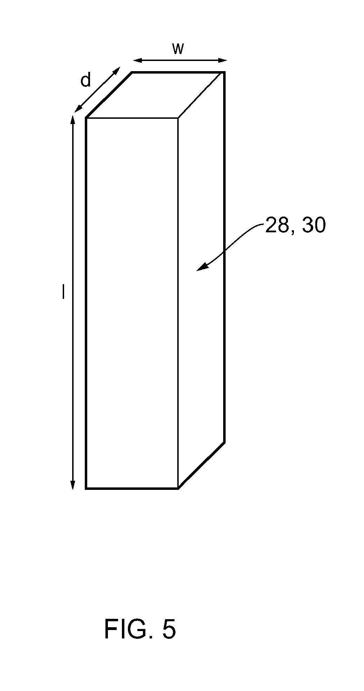

Figure 5 shows an enlarged view of a single spacer 26, 30 in the form of a rectangular prism. Typical dimensions of the spacer may be a length I of 20-40mm, a width w of 1.5-4mm and a depth d of 4-5mm. The spacers 26, 30 are solid and are made from the same material as the filler used for the gaps 28, 32 having been moulded and precured. Because the spacers are of the same material as the filler, and not of a "foreign" material, they do not present any discontinuity to the filled gaps between the adjacent panels and therefore do not compromise the integrity of the assembly. It is therefore not necessary to remove the spacers 26, 30 prior to filling the gaps which would be both time consuming and would risk damaging the panels. After the filler has been used to fill the gaps between adjacent panels the spacers 26, 30 are no longer visible. This creates a uniform appearance which permits an easy visual check that the panels and filler have no gaps. However, if the spacers 26, 30 are too close to the surface of the panel or if they lie proud of the panel surface they may readily be abraded back so that they become flush with the surface of the panels.

Thus a smooth, aerodynamic surface can be obtained for the fan track liner.

As well as providing substantially uniform spacing between panels, the spacers 26, 30 allow some movement between the panels during the process of bonding the panels to the fan case 10.

As they are moulded, the spacers 26, 30 can be made to any suitable shape and need not necessarily be of a rectangular prism shape. Other spacer shapes include a T-shape and a cruciform shape that can be used at the position where corners of adjacent panels meet. The number of spacers used in each position will vary with the requirements of each specific application and may not be the same as described above.

Although in the foregoing description the panels are exemplified as fan track liner panels or ice-impact panels, it will be readily apparent to one skilled in the art that the spacers may be used with other panels, such as acoustic panels.

It will also be appreciated that the number, type and arrangement of panels may differ between different types of gas turbine engine, and need not be the same as in the foregoing description.

Further, the invention is also applicable to other applications where a plurality of panels are arranged in juxtaposition. For example, wall or floor tiles may be spaced apart using spacers that are made from grout, or filler, material that is substantially the same material that is used to fill the gaps between the tiles.

## Claims

1. A panelled assembly comprising:
a plurality of panels (16, 18, 20, 22, 24) attached to a substrate (10) in juxtaposition;
at least one spacing element (26, 30) located between at least one pair of adjacent panels, the spacing element arranged to maintain separation of the panels at a predetermined distance; and
filler material (34) filling a gap (28, 32) between adjacent panels due to the presence of the or each spacing element;
wherein the or each spacing element (26, 30) comprises substantially the same material as the filler material.

2. A panelled assembly according to claim 1 comprising a plurality of spacing elements (26, 30) located between adjacent pairs of panels, such that substantially all of the panels are maintained in a spaced-apart configuration, with gaps (28, 32) of predetermined size therebetween, filled with filler material (34).

3. A panelled assembly according to claim 1 or 2, wherein the shape of the spacing element (26, 30) is substantially that of a rectangular prism.

4. A panelled assembly according to any of claims 1-3, wherein the material from which both the filler and the spacing elements are made comprises an epoxy.

5. A panelled assembly according to any preceding claim, wherein the panels are attached to the substrate by an adhesive.

6. A casing for a gas turbine engine comprising:
an annular casing portion having an inner surface (10); and
a casing liner mounted on the inner surface, wherein the casing liner comprises a panelled assembly according to any preceding claim, and the substrate comprises the inner surface (10) of the annular casing portion.

7. A casing according to claim 6, wherein panels are arranged so as to form a first annulus with a spacing element located between circumferentially adjacent panels.

8. A casing according to claim 7, wherein panels are arranged so as to form a second annulus axially spaced from the first annulus, wherein spacing elements are located between circumferentially adjacent and axially adjacent panels.

9. A gas turbine engine comprising a panelled assembly according to any of claims 1-5 or a casing according to any of claims 6-8.

10. A method of forming a panelled assembly on a substrate, the method comprising:
attaching a plurality of panels (16, 18, 20, 22, 24) to the substrate (10) by adhesive; providing a spacing element (26, 30) between adjacent panels so as to maintain separation of the panels at a predetermined distance during attachment; and
filling gaps (28, 32) between panels, due to the presence of the spacing element with a filler (34),
wherein the spacing element comprises substantially the same material as the filler.
